Europäisches Patentamt

(19) European Patent Office

Office européen des brevets

(11) Publication number: **0 228 487**
**B1**

# (12) EUROPEAN PATENT SPECIFICATION

(45) Date of publication of the patent specification:
**19.09.90**

(51) Int. Cl.⁵: **C08L 81/06, C08L 35/06**

(21) Application number: **85309429.0**

(22) Date of filing: **23.12.85**

(54) Polyether sulfone resin containing molding composition and method.

(43) Date of publication of application:
**15.07.87 Bulletin 87/29**

(45) Publication of the grant of the patent:
**19.09.90 Bulletin 90/38**

(84) Designated Contracting States:
**BE DE FR GB IT NL**

(56) References cited:
EP-A- 0 044 703
EP-A- 0 127 852
EP-A- 0 148 594
DE-A- 3 421 949
US-A- 4 278 775
US-A- 4 542 187

**PATENT ABSTRACTS OF JAPAN, vol. 9,
no. 52 (C-269)[1775], 6th March 1985; & JP - A
- 59 191 767 (MITSUI TOATSU KAGAKU K.K.) 30-10-1984**

(73) Proprietor: **ARCO CHEMICAL TECHNOLOGY INC., 3
Christina Centre Suite 902 201 N Walnut Street,
Wilmington Delaware 19801(US)**

(72) Inventor: **Dean, Barry D., 38 Pine Valley Road, Broomall,
PA 19008(US)**

(74) Representative: **Cropp, John Anthony David et al,
MATHYS & SQUIRE 10 Fleet Street, London,
EC4Y 1AY(GB)**

## Description

This invention relates to molding compositions. More specifically, this invention relates to a moldable composition containing a polyether sulfone resin.

In one of its more specific aspects, this invention relates to the incorporation of a copolymer of a vinyl aromatic monomer and a maleimide monomer into a polyether sulfone resin to reduce the melt viscosity of the polyether sulfone resin.

Thermoplastic blends of polyphenylene oxide and styrene maleimide copolymers are known from US 4 278 755 and EP 0 044 703.

According to this invention, there is provided a moldable composition comprising a physical mixture of from 99 to 1% by weight of a polyether sulfone resin with from 1 to 99% by weight of a copolymer containing recurring units of a vinyl aromatic monomer and recurring units of a maleimide monomer.

Also, according to this invention there is provided a method of producing a molded composition which comprises forming a composition comprising a physical mixture of from 99 to 1% by weight of a polyether sulfone resin with from 1 to 99% by weight of a copolymer containing recurring units of a vinyl aromatic monomer and recurring units of a maleimide monomer, and molding the resulting composition.

According to this invention, there is also provided a method of reducing the melt viscosity of a polyether sulfone resin which comprises incorporating into the polyether sulfone resin a copolymer containing recurring units of a vinyl aromatic monomer and recurring units of a maleimide monomer, the copolymer being present in the polyether sulfone resin in an amount sufficient to reduce the melt viscosity of the polyether sulfone resin.

In the practice of this invention any suitable polyether sulfone resin can be employed. Suitable polyether sulfone resins include poly(diphenyl ether sulfone), Poly(diphenyl sulfone-diphenyl ether sulfone)copolymer and poly(diphenyl sulfone-bisphenol A)copolymer which is the preferred polyether sulfone.

Poly(diphenyl sulfone-Bisphenol A)copolymer is designated Udel® P-1700 Polysulfone Resin, commercially available from Union Carbide Corporation.

U.S. Pat. Nos. 4 108 834; 4 275 186 and 4 307 222 describe the preparation of various polyarylene polyether resins including polyether sulfones and their derivatives.

Preferably, the vinyl aromatic/maleimide copolymer employed in the invention will comprise from 50 to 60 mole% recurring units of a vinyl aromatic monomer and from 50 to 40 mole% recurring units of a maleimide monomer. The vinyl aromatic/maleimide copolymer should have a peak molecular weight form 50,000 to 500,000; most preferably 50,000 to 150,000.

The vinyl aromatic monomer may be styrene, p-methyl-styrene, vinyltoluene, t-butylstyrene, α-methylstyrene, monobromostyrene, dibromostyrene, tribromostyrene, monochlorostyrene, dichlorostyrene, trichlorostyrene, dimethylstyrene and the like, and their mixtures. The vinyl aromatic monomer most preferred is styrene.

The maleimide monomer may be maleimide or its N-substituted derivatives, like N-methylmaleimide, N-ethylmaleimide, N-propylmaleimide, N-butylmaleimide, N-phenylmaleimide, N-(tolyl)maleimide, N-(2,5-dimethyl)maleimide, N(2,6-dimethyl)maleimide, N-2-chlorophenyl)maleimide, N-(3-chlorophenyl)maleimide, N-(4-chlorophenyl)maleimide, N-(2,3-dichlorophenyl) maleimide, N-(2,4-dichlorophenyl)maleimide, N-(2,6-dichlorophenyl)maleimide, N-(2-bromophenyl)maleimide, N-(3-bromophenyl)maleimide, N-(2,3-dibromophenyl)maleimide, N-2,4-dibromophenyl)maleimide, N-(2,5-dibromophenyl)maleimide, tribromophenylmaleimide, and their mixtures. The maleimide most preferred is N-phenylmaleimide.

The vinyl aromatic/maleimide copolymer can be prepared in a bulk process, a continuous bulk process, a solution process or a suspension process. The preferred method of preparation is a suspension process.

The moldable polyblends of this invention can also include other ingredients such as extenders, fillers, processing aids, pigments, mold release agents and the like, for their conventionally employed purpose. Also, reinforcing fillers in amounts sufficient to impart reinforcement can be incorporated, such as glass flakes and chopped glass fibers.

The following examples serve to demonstrate the invention.

### Example 1

This example serves to demonstrate the preparation of a styrene/N-phenylmaleimide copolymer suitable for use in this invention by the suspension process.

A citrate bottle was charged with about 140 grams of water, 37.6 grams of styrene, 62.4 grams of N-phenylmaleimide, 0.57 grams of t-butylperoctoate, 0.32 gram of t-butyl perbenzoate, 0.002 gram of sodium bisulfite and 1.8 grams of tricalciumphosphate. The bottle was capped and placed in an oil bath with constant agitation. The bottle was heated to 95°C for 1.0 hour and then to 140°C for 3.5 hours. The beads which formed were filtered, acidified to pH = 1.0 and washed with water. The total weight of the beads recovered was 99.2 grams (99.2% conversion). The copolymer was analyzed and found to contain 5.1% N which corresponds to 63.02 wt. % N-phenylmaleimide (50 mole %). The copolymer was tested and found to exhibit a glass transition temperature of 223°C by differential scanning calorimetry. The copolymer had a peak molecular weight of 188,000, a weight average molecular weight (Mw) of 298,000 and a number average molecular weight (Mn) of 129,600.

Examples 2-4

The following examples demonstrate the preparation of a control and two moldable polyblends of this invention.

Udel® P-1700 Polysulfone Resin, (Union Carbide Corporation), was melt compounded with the styrene/N-phenylmaleimide copolymer produced in Example 1 at 320°C. Various shaped test specimens were molded at 320°C to assess physical properties and melt rheology. The compositions of the polyblends, their physical properties and melt rheology data are shown in the following Table I.

## TABLE I

| | | Example No. | |
|---|---|---|---|
| | 2(control) | 3 | 4 |
| Udel® P-1700 Polysulfone Resin | 100 | 100 | 100 |
| S/N-PMI (phr) | 0 | 2.5 | 5 |
| Tensile strength (psi) | 10,105 | 10,190 | 10,421 |
| (kPa) | 69671 | 70258 | 71850 |
| Flex strength (psi) | 16,061 | 16,100 | 16,777 |
| (kPa) | 110737 | 111006 | 115673 |
| Flex modulus (psi) | 377,040 | 376,200 | 393,560 |
| (mPa) | 2600 | 2594 | 2735 |
| DTUL 1/8", 0.32cm unannealed | 329°F / 165°C | 329°F / 165°C | 329°F / 165°C |
| Notched Izod (ft-lbs/in) | 0.98 | 0.85 | 0.85 |
| (J/cm) | 0.52 | 0.45 | 0.45 |
| Gardner Falling Weight Index (in-lbs) | 480+ | 480+ | 480+ |
| (Nm) | >54.23 | >54.23 | >54.23 |
| Elongation (%) | 74 | 74 | 76 |
| Instron melt rheology (325°C, L/D=20, $10^{-1}$ Pas at): sec -1 | | | |
| 29.45 | 19,838 | 17,204 | 15,473 |
| 147.27 | 12,624 | 10,981 | 9,842 |
| 589.09 | 9,211 | 8,327 | 7,184 |
| 2,945.47 | 3,638 | 3,117 | 2,838 |
| 5,890.94 | 2,441 | 2,127 | 1,903 |

The data of Table I serve to show that copolymers of a vinyl aromatic monomer and a maleimide monomer substantially reduce the melt viscosity of polyether sulfone resins without having a deleterious effect on physical properties upon molding.

**Claims**

1. A moldable polymer composition comprising from 99 to 1% by weight of a polyether sulfone resin and from 1 to 99% by weight of a copolymer containing recurring units of a vinyl aromatic monomer and recurring units of a maleimide monomer.

2. The polymer composition of claim 1 in which said maleimide monomer is an N-substituted maleimide monomer.

3. The polymer composition of claim 2 in which said maleimide monomer is N-phenylmaleimide.

4. The polymer composition of any one of claims 1 to 3 in which said polymer contains from 50 to 60 mole% recurring units of a vinyl aromatic monomer and from 40 to 50 mole% recurring units of a maleimide monomer.

5. The polymer composition of any one of claims 1 to 4 in which said copolymer has a peak molecular weight of from 50,000 to 500,000.

6. The polymer composition of any one of claims 1 to 5 in which said polyether sulfone resin is selected from the group consisting of poly(diphenyl ether)sulfone, poly(diphenyl sulfone-diphenyl ether sulfone)copolymer and poly(diphenyl sulfone-bisphenol A)copolymer.

7. The polymer composition of any one of claims 1 to 6 in which said copolymer is styrene/N-phenylmaleimide.

8. A method of producing a molded polymer composition which comprises forming a blend comprising from 99 to 1% by weight of a polyether sulfone resin and from 1 to 99% by weight of a copolymer containing recurring units of a vinyl aromatic monomer and recurring units of a maleimide monomer, and molding the resulting blend.

9. A method of recuding the melt viscosity of a polyether sulfone resin upon molding which comprises incorporating into the polyether sulfone resin a copolymer containing recurring units of a vinyl aromatic monomer and recurring units of a maleimide monomer, the copolymer being incorporated in the polyether sulfone resin in an amount sufficient to reduce the melt viscosity of the polyether sulfone resin upon molding.

10. The method of claim 8 or claim 9 in which said maleimide monomer is an N-substituted maleimide monomer.

11. The method of claim 10 in which said maleimide monomer is N-phenylmaleimide.

12. The method of any one of claims 8 to 11 in which said polyether sulfone resin is selected from the group consisting of poly(diphenyl ether)sulfone, poly(diphenyl-sulfone-diphenyl ether sulfone)copolymer and poly(diphenyl sulfone—Bisphenol A)copolymer.

13. The method of any one of claims 8 to 12 in which said copolymer has a peak molecular weight of from 50,000 to 500,000.

14. The method of any one of claims 8 to 13 in which said copolymer is styrene/N-phenylmaleimide copolymer.

**Patentansprüche**

1. Formbare Polymerzusammensetzung, umfassend 99 bis 1 Gew.-% eines Polyethersulfonharzes und 1 bis 99 Gew.-% eines Copolymers, das wiederkehrende Einheiten eines aromatischen Vinylmonomeren und wiederkehrende Einheiten eines Maleimidmonomeren enthält.

2. Polymerzusammensetzung nach Anspruch 1, worin das Maleimidmonomer ein N-substituiertes Maleimidmonomer ist.

3. Polymerzusammensetzung nach Anspruch 2, worin das Maleimidmonomer N-Phenylmaleimid ist.

4. Polymerzusammensetzung nach einem der Ansprüche 1 bis 3, worin das Copolymer 50 bis 60 Mol-% wiederkehrende Einheiten eines aromatischen Vinylmonomeren und 40 bis 50 Mol-% wiederkehrende Einheiten eines Maleimidmonomeren enthält.

5. Polymerzusammensetzung nach einem der Ansprüche 1 bis 4, worin das Copolymer ein Spitzenmolekulargewicht von 50 000 bis 500 000 hat.

6. Polymerzusammensetzung nach einem der Ansprüche 1 bis 5, worin das Polyethersulfonharz ausgewählt ist aus der aus Poly-(diphenylether-)sulfon, Poly-(diphenylsulfon-diphenylethersulfon)-Copolymer und Poly-(diphenylsulfon-Bisphenol A)-Copolymer bestehenden Gruppe.

7. Polymerzusammensetzung nach einem der Ansprüche 1 bis 6, worin das Copolymer Styrol/N-Phenylmaleimid ist.

8. Verfahren zur Herstellung einer geformten Polymerzusammensetzung, welches folgende Schritte umfaßt:
   – Herstellen einer Mischung, die 99 bis 1 Gew.-% eines Polyethersulfonharzes und 1 bis 99 Gew.-% eines Copolymers umfaßt, das wiederkehrende Einheiten eines aromatischen Vinylmonomeren und wiederkehrende Einheiten eines Maleimidmonomeren enthält, und
   – Formen der daraus resultierenden Mischung.

9. Verfahren zum Reduzieren der Schmelzviskosität eines Polyethersulfonharzes nach dem Formen, welches das Einbringen eines Copolymeren, das wiederkehrende Einheiten eines aromatischen Vinylmonomeren und wiederkehrende Einheiten eines Maleimidmonomeren enthält, in das Polyethersulfonharz umfaßt, wobei das Copolymer in das Polyethersulfonharz in einer Menge eingebracht wird, die zum Reduzieren der Schmelzviskosität des Polyethersulfonharzes nach dem Formen ausreichend ist.

10. Verfahren nach Anspruch 8 oder Anspruch 9, worin das Maleimidmonomer ein N-substituiertes Maleimidmonomer ist.

11. Verfahren nach Anspruch 10, worin das Maleimidmonomer N-Phenylmaleimid ist.

12. Verfahren nach einem der Ansprüche 8 bis 11, worin das Polyethersulfonharz ausgewählt ist aus der aus Poly-(diphenylether-)sulfon, Poly-(diphenylsulfon-diphenylethersulfon)-Copolymer und Poly-(diphenylsulfon-Bisphenol A)-Copolymer bestehenden Gruppe.

13. Verfahren nach einem der Ansprüche 8 bis 12, worin das Copolymer ein Spitzenmolekulargewicht von 50 000 bis 500 000 hat.

14. Verfahren nach einem der Ansprüche 8 bis 13, worin das Copolymer ein Styrol/N-Phenylmaleimid-Copolymer ist.

## Revendications

1. Composition de polymères à mouler, caractérisée en ce qu'elle comprend de 99 à 1% en poids d'une résine de polyéther sulfone et de 1 à 99% en poids d'un copolymère contenant des unités récurrentes d'un monomère vinyl aromatique et des unités récurrentes d'un monomère de type maléimide.

2. Composition de polymères suivant la revendication 1, caractérisée en ce que ce monomère de type maléimide est un maléimide N-substitué.

3. Composition de polymères suivant la revendication 2, caractérisée en ce que ce monomère de type maléimide est le N-phénylmaléimide.

4. Composition de polymères suivant l'une quelconque des revendications 1 à 3, caractérisée en ce que ce copolymère contient de 50 à 60% en moles d'unités récurrentes d'un monomère vinyl aromatique et de 40 à 50% en moles d'unités récurrentes d'un monomère de type maléimide.

5. Composition de polymères suivant l'une quelconque des revendications 1 à 4, caractérisée en ce que ce copolymère a un poids moléculaire de pic de 50 000 à 500 000.

6. Composition de polymères suivant l'une quelconque des revendications 1 à 5, caractérisée en ce que cette résine de polyéther sulfone est choisie dans le groupe consistant en poly(diphényl éther)sulfone, copolymère de poly(diphényl sulfone-diphényl éther sulfone) et copolymère de poly(diphényl sulfone-bisphényl A).

7. Composition de polymères suivant l'une quelconque des revendications 1 à 6, caractérisée en ce que ce copolymère est un copolymère de styrène/N-phénylmaléimide.

8. Procédé de production d'une composition de polymères moulée, caractérisé en ce qu'il comprend la formation d'un mélange comprenant de 99 à 1% en poids d'une résine de polyéther sulfone et de 1 à 99% en poids d'un copolymère contenant des unités récurrentes d'un monomère vinyl aromatique et des unités récurrentes d'un monomère de type maléimide, et le moulage du mélange résultant.

9. Production pour réduire la viscosité à l'état fondu d'une résine de polyéther sulfone lors du moulage, caractérisé en ce qu'il comprend l'incorporation dans la résine de polyéther sulfone d'un copolymère contenant des unités récurrentes d'un monomère vinyl aromatique et des unités récurrentes d'un monomère de type maléimide, le copolymère étant incorporé dans la résine de polyéther sulfone en une quantité suffisante pour réduire la viscosité à l'état fondu de la résine de polyéther sulfone lors du moulage.

10. Procédé suivant la revendication 8 ou la revendication 9, caractérisé en ce que ce monomère de type maléimide est un maléimide N-substitué.

11. Procédé suivant la revendication 10, caractérisé en ce que ce monomère de type maléimide est le N-phénylmaléimide.

12. Procédé suivant l'une quelconque des revendications 8 à 11, caractérisé en ce que cette résine de polyéther sulfone est choisi dans le groupe consistant en poly(diphényl éther)sulfone, copolymère de poly(diphényl sulfone-diphényl éther sulfone) et copolymère de poly(diphényl sulfone-bisphényl A).

13. Procédé suivant l'une quelconque des revendications 8 à 12, caractérisé en ce que ce copolymère a un poids moléculaire de pic de 50 000 à 500 000.

14. Procédé suivant l'une quelconque des revendications 8 à 13, caractérisé en ce que ce copolymère est un copolymère de styrène/N-phénylmaléimide.